# EUROPEAN PATENT SPECIFICATION

(11) **EP 2 395 740 B1**
(45) Date of publication and mention of the grant of the patent: **13.08.2014**
(21) Application number: 10461519.0
(22) Date of filing: 09.06.2010
(51) Int. Cl.: H04N 1/405, B41M 1/04, B41F 5/24

(54) **A method for printing on tissue paper**
Verfahren zum Drucken auf Seidenpapier
Procédé d'impression sur du papier mince

(43) Date of publication of application: 14.12.2011
(73) Proprietor: Zaklad Poligraficzny Pol- Makprzemyslaw Makowiak, Danuta makowiak SP.J., 62-081 Przezmierowo (PL)
(72) Inventor: Kozlak, Przemyslaw, 62-081 Przezmierowo (PL); Makowiak, Przemyslaw, 62-081 Przezmierowo (PL)
(74) Representative: Pawlowski, Adam

(56) References cited:
- EP-A1- 0 910 206
- US-A1- 2003 038 976
- US-A1- 2003 044 578
- US-A1- 2009 067 006
- Sasan Gooran: "Hybrid Halftoning", , 30 April 2005 (2005-04-30), XP002612110, Retrieved from the Internet: URL:http://www.t2f.nu/t2frapp_f23.pdf [retrieved on 2010-11-24]
- Sasan Gooran, Björn Kruse: "Hybrid Halftoning, two novel hybrid halftoning techniques", , 29 October 2005 (2005-10-29), XP002612111, Retrieved from the Internet: URL:http://www.t2f.nu/t2frapp_f_103.pdf [retrieved on 2010-11-24]
- "Flexodruck" In: Helmut Kipphan: "Handbuch der Printmedien", 8 November 2000 (2000-11-08), Springer Verlag, Berlin, XP002612112, ISBN: 3-540-66941-8 pages 47-48, * chapter "Flexodruck", p.47-p.48figures 1.3-9 *
- Sasan Gooran: "Hybrid Halftoning in Flexography", , 14 March 2004 (2004-03-14), XP002612113, Retrieved from the Internet: URL:http://www.t2f.nu/t2f_rapp_f_73.pdf [retrieved on 2010-11-24]

## Description

The present invention relates to printing on tissue paper.

Printing on tissue paper is a complicated process, especially with respect to multi-color, high resolution images. Such images are printed on products such as tissue paper table napkins. The process difficulties are related to uneven structure of tissue paper and its high ink absorption properties. This limits the range of graphics that can be printed thereon.

A common method used to print on tissue paper is flexographic printing, wherein ink is transferred to the substrate from a flexible relief plate with a halftone image. The halftone images for printing on tissue paper are typically prepared using amplitude-modulated (AM) screening, in which the dot size increases with the tonal value of the image. However, due to uneven properties of the tissue paper, and its high ink absorption properties, it is not possible to print images with low tones (highlights), such as tones having intensity below 5%, as the effect of loss of dots occurs, i.e. the smallest dots representing the lightest tones are not evenly transferred to the paper. For this reason, to achieve a predictable effect, the lightest tones are cut off from the halftone image. Therefore, graphics with smooth color transitions in highlights cannot be properly reproduced on tissue paper using relief plates with halftone images prepared by typical AM screening.

It is also known to prepare halftone images using frequency-modulated (FM) screening, wherein the dot size is uniform and the frequency of dots increases with the tonal value of the image. However, such images have been used so far only on high quality paper or foil, which have even structure and on which the small dots of the FM screen can be easily applied. In case of tissue paper, its uneven properties and its high ink absorption cause uneven dot gain, i.e. the increase of the size of the printed dot and conglomeration of dots as compared to the original dot on the relief plate, which leads to images of unstable quality. For that reasons, FM screening has not been used for flexographic printing on tissue paper, as it is hard to properly determine the optimal size of dot that can be transferred to the tissue paper and therefore to obtain the final image of satisfying quality.

Various hybrid screening techniques are also known, in which AM screening is combined with FM screening. For the reasons explained above with respect to FM screening, hybrid screening techniques have also not been used so far to print on tissue paper.

One attempt to solve the problem of printing on tissue paper with uneven properties is proposed in the US patent 6477948, which presents a method for printing on absorbent paper products, such as table napkins, in a flexographic printing press, which involves applying a print enhancing fluid to two outer surfaces of the paper substrate. The use of the print enhancing fluid allows higher color density images without the need to use more concentrated ink, i.e. without changing the size or number of halftone dots, due to the fact that the print enhancing fluid changes the properties of migration of the ink into the background.

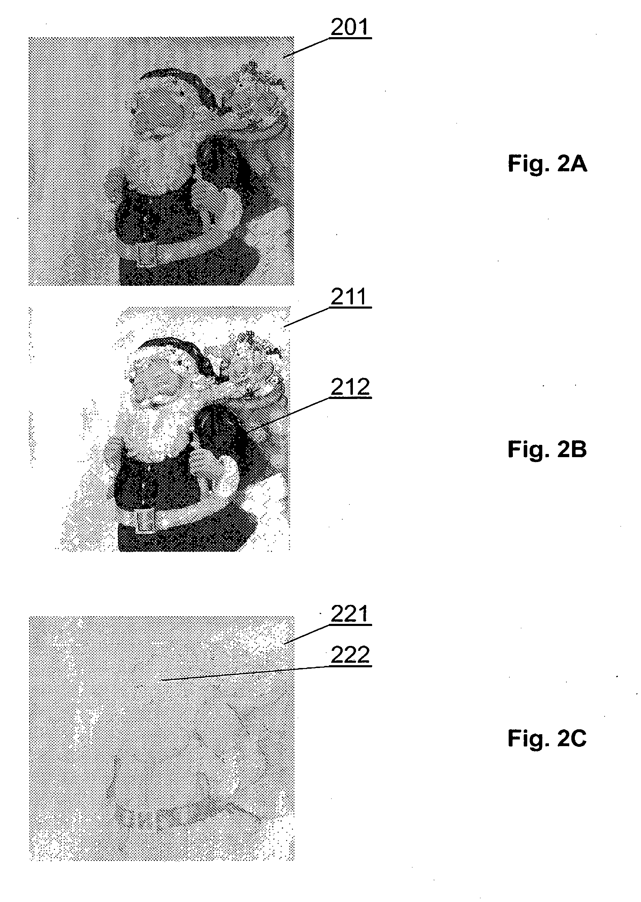

An article "Hybrid Halftoning" by Sasan Gooran (30 April 2005, http://www.t2f.nu/t2frapp f23.pdf) in chapter 3 discloses a technology for hybrid screening. It refers to generating a mask (Fig. 2b), which defines an area comprising large concentration of tones, regardless of their intensity. Next, the source image is screened such that the areas defined by the mask are subject to AM modulation and the areas outside the mask are FM-modulated. As a result, a single image with a hybrid screen is generated. Moreover, the same document presents in chapter 4 an independent technology wherein a mask is generated that defines an area comprising tones of very high or very low intensity, regardless of their concentration. Next, the input image is screened such that in the areas defined by the mask AM modulation is used and in the areas outside the mask - FM modulation is used. As a result, a single image with a hybrid screen is generated.

The object of the invention is to provide another method for printing on tissue paper, which increases the quality of the print as compared to typical AM, FM or hybrid screen printouts.

The object of the invention is a method for printing on tissue paper, comprising the steps of providing an image to be printed, separating the image to separated images and screening the separated images to create halftone images, making relief plates with the halftone images and printing the image on tissue paper in a flexographic printing press comprising printing units in which tissue paper is pressed by an impression cylinder to a plate cylinder carrying a relief plate, to which ink is transferred from an anilox cylinder, characterized by separating the image to at least one high intensity separated image and at least one low intensity separated image, wherein the high intensity separated image comprises tones above a high intensity threshold in concentrations larger than the low intensity separated image, screening the at least one high intensity separated image by amplitude modulation screening, screening the at least one low intensity separated image by hybrid screening, wherein tones below a low intensity threshold are screened by frequency modulation screening and tones having intensity above the low intensity threshold are screened by amplitude modulation screening, for each relief plate with the low intensity separated image, providing the anilox cylinder having the line screen higher than the line screen of each anilox cylinder provided for the relief plate with the high intensity separated image.

The high intensity threshold can be higher than 80%.

The image to be printed can be a multi-color image separated into particular colors and the high intensity threshold can be determined individually for each separated color of the image to be printed.

The low intensity threshold can be lower than 10%.

The image to be printed can be a multi-color image separated into particular colors and the low intensity threshold can be determined individually for each low intensity separated image.

The line screen of the anilox cylinder provided for the relief plate with the high intensity separated image can be between 100 and 190 Ipi and the line screen of the anilox cylinder provided for the relief plate with the low intensity separated image can be between 230 and 250 Ipi.

For the relief plate of one printing unit with the high intensity separated image the pressure between the impression cylinder and the plate cylinder can be higher than the pressure between the impression cylinder and the plate cylinder for the for the relief plate of another printing unit with the low intensity separated image.

The high intensity separated image can be printed by a printing unit located before the printing unit by which the low intensity separated image is printed.

Ink for the printing unit printing the low intensity separated image can be provided from an ink reservoir having a height lower than the height of the ink reservoir from which ink is provided for the printing unit printing the high intensity separated image.

Ink for the printing unit printing the high intensity separated image can have initial viscosity of 30+-7s DIN 4mm/20C product temperature and pH of 7,5-9,0.

Tissue paper can be is pre-pressed in a glazing station.

Another object of the invention is a tissue paper product having an image printed thereon by the method of the invention. Furthermore, the object of the invention is in particular a tissue paper table napkin having an image printed thereon by the method of the invention.

The object of the invention is explained by means of a drawing, on which:
Fig. 1 presents a schematic of a system for producing tissue paper table napkins.
Fig. 2 presents an image to be printed, Fig. 2B presents a high intensity separated image and Fig. 2C presents a low intensity separated image according to the invention.
Fig. 3 presents a hybrid screen.
Fig. 4 presents a flexographic printing press.

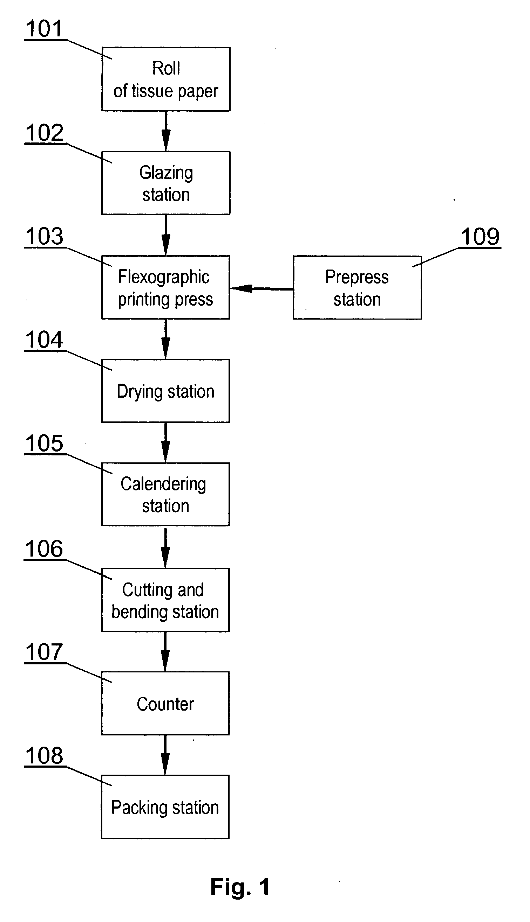

Fig. 1 presents a schematic of a system for producing tissue paper table napkins, in which the method for printing on tissue paper according to the invention can be employed. Tissue paper is fed in form of a tape from a roll 101. The stretched and aligned tissue paper tape is input to a glazing station 102 for leveling its thickness, internal and external structure, which facilitates the following printing steps. Next, the tissue paper tape is input to a flexographic printing press 103, in which an image to be printed, separated into a plurality of separated images is printed by individual printing units, each unit utilizing a relief plate with specific separated image. The relief plates used in the flexographic printing press are prepared in a prepress station 109. The printed tape is passed to a drying station 104 for drying the applied ink. Next, a calendaring station 105 presses a decorative pattern on the paper. Then, a cutting and bending station 106 cuts the tape to appropriate size so that, after bending, a table napkin is formed. Finally, a number of napkins selected by a counter 107 is packed to foil in a packing station 108.

Fig. 2A shows an image to be printed and Fig. 2B and 2C show the image separated into two separated images according to the invention. The image 201 to be printed is separated to at least one high intensity separated image 211 and at least one low intensity separated image 221. The high intensity separated image 211 comprises tones above a high intensity threshold in concentrations 212 larger than the concentrations 222 of tones above the high intensity threshold in the low intensity separated image 221. The term "concentration" is to be understood as a grouping of tones above the high intensity threshold exceeding a given geometric area, such as square or circle having area above e.g. 1 mm2. In other words, all tones of high intensity occupying a square larger than 1 mm2, such as the coat 212, are separated into the high intensity separated image and tones of high intensity occupying squares smaller than 1 mm2, such as the eyes 222, are separated into the low intensity separated image. In other words, large areas of high intensity are separated into the high intensity separated image and small areas or narrow, thin areas the parts of which do not exceed a given concentration are separated into the low intensity separated image. The tones having intensity below the high intensity threshold and over a low intensity threshold can be separated either to the high intensity separated image 221 or, preferably, to the low intensity separated image 221. All tones having intensity below the low intensity threshold are separated to the low intensity separated image 221. Although the image presented in Fig. 2A is monochromatic, the same principle can be applied to multi-color images, wherein separation into particular colors can be performed by the methods well known in the art, and the separation of particular colors to high intensity separated images and low intensity separated images is to be performed according to the above principles. In practical applications, the high intensity separated images will comprise intense uniform color backgrounds.

The high intensity threshold can be determined individually for each separated color of the image to be printed. The high intensity threshold may depend on the amount of the specific color, the specific parameters of ink used to print that color, the intensity and amount of that color with respect to other colors. Preferably, the high intensity threshold is higher than 80%.

After the image separation, the separated images are screened. The high intensity separated image are screened by AM screening, as is well known in the art. The low intensity separated images are screened by hybrid screening, wherein tones below a low intensity threshold are screened by FM screening and tones having intensity above the low intensity threshold are screened by AM screening.

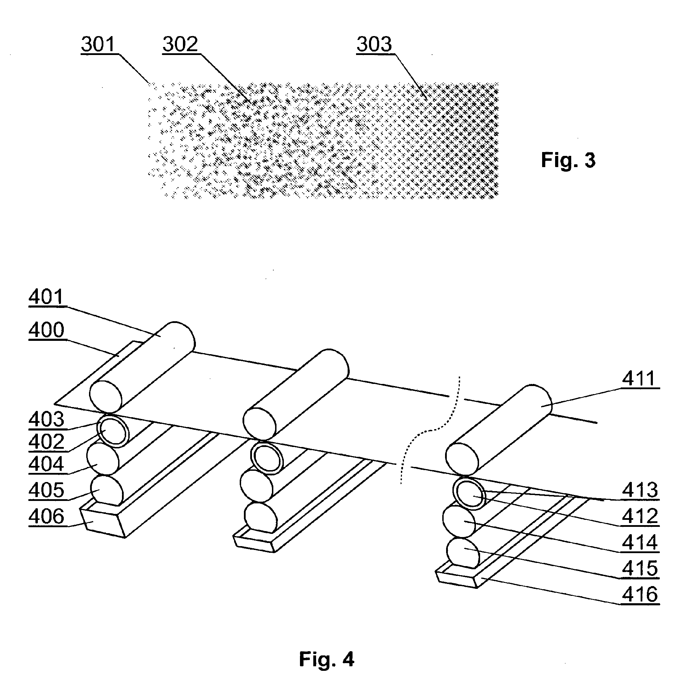

Fig. 3 shows an example of an image 301 screened with a hybrid screen, wherein the left part 302 of the image is screened by FM screening and the right part 303 of the image is screened by AM screening. In the example of Fig. 3, the dot size of the FM screen is similar to the smallest dot of the AM screen. However, it is also possible to use FM screen dots much smaller, such as up to 10 times smaller, than the smallest AM screen dots.

The low intensity threshold can be determined individually for each low intensity separated image. The low intensity threshold may depend on the amount of the specific color, the specific parameters of ink used to print that color, the intensity and amount of that color with respect to other colors. Preferably, the low intensity threshold is below 10%, preferably below 5%.

Fig. 4 shows the structure of the flexographic printing press. The presented embodiment relates to an in-line press, but other types of presses can be used as well, such as a stack press or a common impression cylinder press, provided they comply with the following principles. The printing press comprises a plurality of printing units, for example 7 or 9 units. In each unit, tissue paper 400 is pressed by an impression cylinder 401, 411 to a plate cylinder 402, 412 with a relief plate 403, 413, to which ink is transferred from an anilox cylinder 404, 414. Ink to the anilox cylinder 404, 414 is fed from an ink reservoir 406, 416, preferably via a fountain cylinder 405, 415. The anilox cylinder 404, 414 comprises rows of cells that transfer ink to the relief plate 403, 413. The number of cells of the anilox cylinder 404, 414 is defined as a line screen, measured in lines per inch (Ipi). For printing tissue paper with typical AM screened plates, anilox cylinders of 100-190 Ipi are used. The lower the line screen of the anilox cylinder, the larger the cells and the higher amount of ink is transferred to the plate 403, 413. For reasons explained below, the high intensity separated image is printed by a printing unit located before the printing unit by which the low intensity separated image is printed, in the direction of tissue paper feed. Preferably, for the relief plate 403 with the high intensity separated image, an anilox cylinder 404 with a low line screen, namely 100-190 Ipi and preferably 100-120 Ipi, is provided. This guarantees transferring of high amount of ink, which guarantees high intensity reproduction of the high intensity separated image. In turn, for the relief plate 413 with the low intensity separated image, an anilox cylinder 414 with a higher line screen, namely 230-250 Ipi, is provided. Such configuration allows precise representation of the small dots of the fragments of the separated image screened with FM screening and limits the effects of conglomerating of ink dots. Even if, due to small amount of ink, not all dots are represented in the printed image, such loss will not be recognizably visible in the low intensity separated image. Printing the high intensity separated image before the low intensity separated image guarantees that the large amount of ink with which the high intensity separated image is printed will not cover the small dots of the low intensity separated image. In case the image is separated into a plurality of high intensity separated images and a plurality of low intensity separated images, all high intensity separated images are preferably printed before the low intensity separated images and the images in each group may be arranged by the amount of ink used in each image or the intensity of ink used, i.e. the images with highest amount of ink or highest intensity ink are printed first.

The pressure between the plate cylinder 412 and the impression cylinder 411 for hybrid screen relief plates 413 is controllable and set to a value depending on the type of ink and parameters of the relief plate 413, such as to limit the effect of flattening of dots when the pressure is too large.

In order to provide uniform properties of the ink used to print the low intensity separated images and avoid sedimentation of ink components, such as pigments, the ink for the printing unit printing the low intensity separated image is provided from an ink reservoir 416 lower than the ink reservoir 406 from which ink is provided for the printing unit printing the high intensity separated image. Since the consumption of ink from the ink reservoir 416 is lower than from the reservoir 406, due to lower tones printed by relief plate 413 in comparison to relief plate 403, the ink reservoirs 406, 416 may have to be re-filled at similar periods of time.

By combining the use of AM screening for backgrounds and high intensity separated images with the use of hybrid screening for low intensity separated images, the tissue paper can be printed with unexpectedly higher quality. By representing the low tones with a FM screening, the effect of loss of dots does not occur and it is possible to represent the whole spectrum of low tones from 0 to 10%. Since the large areas of high tones are not present in the hybrid screen relief plates, the plates can be used with anilox cylinder of high line screen, which facilitates precise printing of the frequency-modulated dots of the hybrid screen. In turn, the backgrounds are properly reproduced with a dedicated AM screen. This results in an overall image quality clearly better than the quality obtained by solely amplitude-modulated halftone images.

The invention is applicable to tissue paper having a basis weight of 15-18 g/m2 and a thickness of 900-1300 µm. The inks used in flexographic printing press 103 are preferably solvent-free inks having initial viscosity of 30±5s DIN 4mm/20°C product temperature and pH of 7,9-8,5. Metallic inks can also be used, having initial viscosity of 30±7s DIN 4mm/20°C product temperature and pH of 7,5-9,0.

## Claims

1. A method for printing on tissue paper, comprising the steps of:
- providing an image to be printed,
- separating the image to separated monochromatic images and screening the separated monochromatic images to create halftone images,
- making relief plates (403, 413) with the halftone images and
- printing the image on tissue paper in a flexographic printing press (103) comprising separate printing units (401-406, 411-416) for each relief plate (403, 413), wherein in each printing unit (401-406, 411-416) the tissue paper (400) is pressed by an impression cylinder (401, 411) to a plate cylinder (402, 412) carrying the relief plate (403, 413), to which ink is transferred from an anilox cylinder (404, 414),
**characterized by**
- for at least one monochromatic image:
o separating image to a high intensity separated image and a low intensity separated image, wherein the high intensity separated image comprises only pixels having tones above a high intensity threshold in concentrations exceeding a predetermined area and wherein the low intensity separated image comprises the remaining pixels of the image,
o screening the high intensity separated image by amplitude modulation screening and making a relief plate (403, 413) with the halftone image of the high intensity separated image,
o screening the low intensity separated image by hybrid screening, wherein tones below a low intensity threshold are screened by frequency modulation screening and tones having intensity above the low intensity threshold are screened by amplitude modulation screening and making a relief plate (403, 413) with the halftone image of the low intensity separated image, and
o for each relief plate (403) with the low intensity separated image, providing the anilox cylinder (404) having the line screen higher than the line screen of each anilox cylinder (414) provided for the relief plate (413) with the high intensity separated image.

2. The method according to any of previous claims, wherein the image to be printed is a multi-color image separated into particular colors and the high intensity threshold is determined individually for each separated color of the image to be printed.

3. The method according to any of previous claims, wherein the image to be printed is a multi-color image separated into particular colors and the low intensity threshold is determined individually for each low intensity separated image.

4. The method according to any of previous claims, wherein the line screen of the anilox cylinder (404) provided for the relief plate (403) with the high intensity separated image is between 100 Ipi and 190 Ipi and the line screen of the anilox cylinder (414) provided for the relief plate (413) with the low intensity separated image is between 230 Ipi and 250 Ipi.

5. The method according to any of previous claims, wherein for the relief plate (403) of one printing unit (401-406) with the high intensity separated image the pressure between the impression cylinder (401) and the plate cylinder (402) is higher than the pressure between the impression cylinder (411) and the plate cylinder (402) for the relief plate (413) of another printing unit (411-416) with the low intensity separated image.

6. The method according to any of previous claims, wherein the high intensity separated image is printed by a printing unit (401-406) located before the printing unit (411-416) by which the low intensity separated image is printed.

7. The method according to any of previous claims, wherein ink for the printing unit printing the low intensity separated image is provided from an ink reservoir (416) having a height lower than the height of the ink reservoir (406) from which ink is provided for the printing unit printing the high intensity separated image.

8. The method according to any of previous claims, wherein ink for the printing unit printing the high intensity separated image has initial viscosity of 30+-7s DIN 4mm/20C product temperature and pH of 7,5-9,0.

9. The method according to any of previous claims, wherein the tissue paper is pre-pressed in a glazing station (102)

## Patentansprüche

1. Verfahren zum Drucken auf Seidenpapier, die folgenden Schritte umfassend:
das Bereitstellen eines zu druckenden Bilds;
das Aufteilen des Bilds in getrennte einfarbige Bilder und das Rastern der getrennten einfarbigen Bilder, so dass Rasterbilder erzeugt werden;
das Herstellen von Reliefplatten (403, 413) mit den Rasterbildern; und
das Drucken des Bilds auf Seidenpapier in einer Flexodruckpresse (103), die getrennte Druckeinheiten (401-406, 411-416) für jede Reliefplatte (403, 413) umfasst, wobei in jeder Druckeinheit (401-406, 411-416) das Seidenpapier (400) durch eine Druckwalze (401,411) auf eine Plattenwalze (402, 412) gepresst wird, welche die Reliefplatte (403, 413) trägt, auf welche Farbe von einer Aniloxwalze (404, 414) übertragen wird;
**gekennzeichnet durch**
für mindestens ein einfarbiges Bild:
das Aufteilen des Bilds in ein getrenntes Bild mit hoher Intensität und ein getrenntes Bild mit geringer Intensität, wobei das getrennte Bild mit hoher Intensität nur Pixel mit Tönen oberhalb eines Schwellenwerts für hohe Intensität in Konzentrationen umfasst, welche einen vorbestimmten Bereich überschreiten, und wobei das getrennte Bild mit geringer Intensität die restlichen Pixel des Bilds umfasst;
das Rastern des getrennten Bilds mit hoher Intensität **durch** Amplitudenmodulationsrasterung sowie das Herstellen einer Reliefplatte (403, 413) mit dem Halbtonbild des getrennten Bilds mit hoher Intensität;
das Rastern des getrennten Bilds mit geringer Intensität **durch** Hybridrasterung, wobei die Töne unterhalb eines Schwellenwertes für geringe Intensität durch Frequenzmodulationsrasterung gerastert werden, und das Herstellen einer Reliefplatte (403, 413) mit dem Halbtonbild des getrennten Bilds mit geringer Intensität; und
für jede Reliefplatte (403) mit dem getrennten Bild mit geringer Intensität das Bereitstellen der Aniloxwalze (404), bei welcher das Zeilenraster höher ist als das Zeilenraster jeder Aniloxwalze (414), die für die Reliefplatte (413) mit dem getrennten Bild mit hoher Intensität vorgesehen ist.

2. Verfahren nach einem der vorstehenden Ansprüche, wobei das zu druckende Bild ein mehrfarbiges Bild ist, das in einzelne Farben getrennt ist, und wobei der Schwellenwert für die hohe Intensität einzeln für jede getrennte Farbe des zu druckenden Bilds bestimmt wird.

3. Verfahren nach einem der vorstehenden Ansprüche, wobei das zu druckende Bild ein mehrfarbiges Bild ist, das in einzelne Farben getrennt ist, und wobei der Schwellenwert für die geringe Intensität einzeln für jedes getrennte Bild mit geringer Intensität bestimmt wird.

4. Verfahren nach einem der vorstehenden Ansprüche, wobei das Zeilenraster der Aniloxwalze (404), das für die Reliefplatte (403) mit dem getrennten Bild mit hoher Intensität vorgesehen ist, zwischen 100 Ipi und 190 Ipi liegt, und wobei das Zeilenraster der Aniloxwalze (414), das für die Reliefplatte (413) mit dem getrennten Bild mit geringer Intensität vorgesehen ist, zwischen 230 Ipi undd 250 Ipi liegt.

5. Verfahren nach einem der vorstehenden Ansprüche, wobei für die Reliefplatte (403) der Druckeinheit (401-406) mit dem getrennten Bild mit hoher Intensität der Druck zwischen der Druckwalze (401) und der Plattenwalze (402) höher ist als der Druck zwischen der Druckwalze (411) und dem Plattenzylinder (402) für die Reliefplatte (413) einer anderen Druckeinheit (411-416) mit dem getrennten Bild mit geringer Intensität.

6. Verfahren nach einem der vorstehenden Ansprüche, wobei das getrennte Bild mit hoher Intensität durch eine Druckeinheit (401-406) gedruckt wird, die vor der Druckeinheit (411-416) angeordnet ist, durch die das getrennte Bild mit geringer Intensität gedruckt wird.

7. Verfahren nach einem der vorstehenden Ansprüche, wobei die Farbe für die Druckeinheit des getrennten Bilds mit geringer Intensität aus einem Farbspeicher (416) mit einer Höhe bereitgestellt wird, die niedriger ist als die Höhe des Farbspeichers (406), aus dem Farbe für die Druckeinheit vorgesehen wird, welche das getrennte Bild mit hoher Intensität druckt.

8. Verfahren nach einem der vorstehenden Ansprüche, wobei die Farbe für die Druckeinheit, die das getrennte Bild mit hoher Intensität druckt, eine Ausgangsviskosität von 30 ± 7s DIN 4mm/20 °C Produkttemperatur und einen pH-Wert von 7,5-9,0 aufweist.

9. Verfahren nach einem der vorstehenden Ansprüche, wobei das Seidenpapier in einer Glasierstation (102) einer Druckvorstufe unterzogen wird.

## Revendications

1. Procédé d'impression sur du papier mince, comprenant les étapes consistant à : fournir une image à imprimer,
séparer l'image en images monochromes séparées et tramer les images monochromes séparées pour créer des images à demi-tons,
fabriquer des plaques en relief (403, 413) avec les images à demi-tons et
imprimer l'image sur du papier mince dans une presse d'impression flexographique (103) comprenant des unités d'impression séparées (401-406, 411-416) pour chaque plaque en relief (403, 413), dans lequel dans chaque unité d'impression (401-406, 411-416) le papier mince (400) est pressé par un cylindre d'impression (401, 411) sur un cylindre porte-plaque (402, 412) portant la plaque en relief (403, 413), sur laquelle de l'encre est transférée d'un cylindre anilox (404, 414),
**caractérisé par** les étapes consistant à,
pour au moins une image monochromatique :
séparer l'image en une image séparée haute intensité et une image séparée faible intensité, l'image séparée haute intensité comprenant uniquement des pixels ayant des tons supérieurs à un seuil d'intensité élevée à des concentrations dépassant une zone prédéterminée, et l'image séparée faible intensité comprenant les pixels restants de l'image,
tramer l'image séparée haute intensité par tramage par modulation d'amplitude et fabriquer une plaque en relief (403, 413) avec l'image à demi-tons de l'image séparée haute intensité,
tramer l'image séparée faible intensité par tramage hybride, les tons inférieurs à un seuil de faible intensité étant tramés par tramage par modulation de fréquence et les tons ayant une intensité supérieure au seuil de faible intensité étant tramés par tramage par modulation d'amplitude et fabriquer une plaque en relief (403, 413) avec l'image à demi-tons de l'image séparée faible intensité, et
pour chaque plaque en relief (403) avec l'image séparée faible intensité, fournir le cylindre anilox (404) ayant la trame à lignes plus élevée que la trame à lignes de chaque cylindre anilox (414) prévue pour la plaque en relief (413) avec l'image séparée haute intensité.

2. Procédé selon l'une quelconque des revendications précédentes, dans lequel l'image à imprimer est une image à plusieurs couleurs séparée en couleurs particulières et le seuil de haute intensité est déterminé individuellement pour chaque couleur séparée de l'image à imprimer.

3. Procédé selon l'une quelconque des revendications précédentes, dans lequel l'image à imprimer est une image à plusieurs couleurs séparée en couleurs particulières et le seuil de faible intensité est déterminé individuellement pour chaque image séparée faible intensité.

4. Procédé selon l'une quelconque des revendications précédentes, dans lequel la trame à lignes du cylindre anilox (404) prévue pour la plaque en relief (403) avec l'image séparée haute intensité est comprise entre 100 et 190 Ipi et la trame à lignes du cylindre anilox (414) prévue pour la plaque en relief (413) avec l'image séparée faible intensité est comprise entre 230 et 250 Ipi.

5. Procédé selon l'une quelconque des revendications précédentes, dans lequel, pour la plaque en relief (403) d'une unité d'impression (401-406) avec l'image séparée haute intensité, la pression entre le cylindre d'impression (401) et le cylindre porte-plaque (402) est supérieure à la pression entre le cylindre d'impression (411) et le cylindre porte-plaque (402) pour la plaque en relief (413) d'une autre unité d'impression (411-416) avec l'image séparée faible intensité.

6. Procédé selon l'une quelconque des revendications précédentes, dans lequel l'image séparée haute intensité est imprimée par une unité d'impression (401-406) située avant l'unité d'impression (411-416) par laquelle l'image séparée faible intensité est imprimée.

7. Procédé selon l'une quelconque des revendications précédentes, dans lequel l'encre pour l'unité d'impression imprimant l'image séparée basse intensité est fournie à partir d'un réservoir d'encre (416) ayant une hauteur inférieure à la hauteur du réservoir d'encre (406) à partir duquel l'encre est fournie à l'unité d'impression imprimant l'image séparée haute intensité.

8. Procédé selon l'une quelconque des revendications précédentes, dans lequel l'encre pour l'unité d'impression imprimant l'image séparée haute intensité a une viscosité initiale de 30 +-7s DIN 4mm/température de produit 20 °C et un pH de 7,5-9,0.

9. Procédé selon l'une quelconque des revendications précédentes, dans lequel le papier mince est pré-pressé dans une station de vitrage (102).
